# EUROPEAN PATENT APPLICATION

(11) **EP 2 252 052 A1**
(43) Date of publication of application: **17.11.2010**
(21) Application number: 09719103.5
(22) Date of filing: 12.03.2009
(51) Int. Cl.: H04N 7/173, H04N 5/765, H04N 5/91

(54) **CONTENT RECORDING SYSTEM, CONTENT RECORDING METHOD, CONTENT RECORDING DEVICE, AND CONTENT RECEIVING DEVICE**

(30) Priority: 12.03.2008 JP 2008063349
(71) Applicant: Sony Corporation, Tokyo 108-0075 (JP)
(72) Inventor: HAYASHI, Morihiko, Tokyo 108-0075 (JP)
(74) Representative: Thévenet, Jean-Bruno
(86) International application number: PCT/JP2009/054736
(87) International publication number: WO 2009/113610

(57) **Abstract**

Provided is a content receiving device, connected to a content recording device that records content data, including a receiving section that receives the content data, a recording folder specifying section that specifies a dedicated folder as a recording destination of the content data when a parental level is set on the content data and an normal folder as the recording destination of the content data when no parental level is set on the content data, and a transmitting section that transmits the content data so that the content data is recorded in a folder specified by the recording folder specifying section of a storage medium contained in the content recording device.

## Description

### Technical Field

The present invention relates to a content recording system, a content recording method, a content recording device, and a content receiving device.

In recent years, a technology is drawing attention which configures a home network by interconnecting devices at home. As the devices at home, there are, for example, a personal computer (PC), a television (TV), a content storage device storing content data such as video and audio, a content reproduction device reproducing content data, and the like.

Further, there is a case where a parental level is set on content data so that, for example, children under 18 can be kept from viewing content data including violence or sexual portrayal. In this case, by restricting the reproduction by a content reproduction device, that is used by children, of content data on which the parental level is set, children can be protected from harmful content data.

Further, a data processing device that automatically sets a parental level on content data broadcast without a parental level being set thereon is described in Patent Literature 1. According to such a data processing device, viewing of even content data broadcast without a parental level being set thereon can be restricted.

### Citation List

### Patent Literature

Patent Literature 1: Japanese Patent Application Laid-Open No. 2006-186981

### Summary of Invention

### Technical Problem

However, a data processing device in related art simply sets a parental level on content data and thus, if a content list or content data is actually requested from a user, it is necessary to determine whether or not a parental level is set for each piece of content data.

The present invention is made in view of the above-mentioned issue, and aims to provide a novel and improved content recording system capable of recording content data on which a parental level is set and content data on which no parental level is set in different folders, a content recording method, a content recording device, and a content receiving device.

### Solution to Problem

According to an embodiment of the present invention, there is provided a content recording system including a content receiving device that receives content data and a content recording device that records the content data received by the content receiving device. The content receiving device includes a transmitting section that transmits the content data, and a recording folder specifying section that specifies a dedicated folder as a recording destination of the content data when a parental level is set on the content data and an normal folder as the recording destination of the content data when no parental level is set on the content data. The content recording device includes a storage section containing the dedicated folder and the normal folder, a recording section that records the content data transmitted from the transmitting section in a folder of the storage section specified by the recording folder specifying section, an authentication section that performs user authentication, and a control section that outputs, when the authentication section authenticates that a user has valid authority, the content data recorded in the dedicated folder of the storage section.

With such a configuration, the recording section records the content data on which a parental level is set into the dedicated folder of the storage section, and records the content data on which a parental level is not set into the normal folder of the storage section, Therefore, when the authentication section authenticates that the user has a valid authority, the control section outputs the content data recorded in the dedicated folder so as to restrict viewing of the content data on which a parental level is set.

The content receiving device may further include an input section where a setting operation of a parental level on the content data is performed by the user. With such a configuration, even though the content data on which a parental level is not set has been received, if the user operates a parental level setting to the input section, the content data can be recorded in the dedicated folder of the storage section by the recording section.

The content receiving device may further include a transmission control section that exercises control so that the content data on which the parental level is set is not transmitted to the content recording device having no dedicated folder. With such a configuration, viewing of the content data on which the parental level is set can be restncted more certainly.

The content recording device may further include an encryption section that encrypts the content data transmitted from the content receiving device and on which the parental level is set, and the recording section may record the content data encrypted by the encryption section in the dedicated folder of the storage section. With such a configuration, even if content data is invalidly read from the storage section, an outflow and invalid viewing of the content data can be prevented because the content data is encrypted.

The storage section may include a plurality of the dedicated folders for each level of the parental level and the recording folder specifying section may specify the dedicated folder in accordance with the level of the parental level of the content data as a recording destination of the content data an which the parental level is set. In such configuration, the reproduction of content data can be restricted more flexibly.

According to another embodiment of the present invention, there is provided a content recording method, including the steps of receiving content data specifying a dedicated folder as a recording destination of the content data when a parental level is set on the content data and an normal folder as the recording destination of the content data when no parental level is set on the content data recording the content data in a specified folder of a storage medium containing the dedicated folder and the normal folder, performing user authentication, and
outputting the content data recorded in the dedicated folder when authenticated that a user has valid authority.

According to another embodiment of the present invention, there is provided a content recording device connected to a content receiving device that receives content data, including a receiving section that receives the content data whose recording destination folder is specified from the content receiving section a storage section containing a dedicated folder and an normal folder a recording section that records the content data received by the receiving section in a specified recording destination folder of the storage section, an authentication section that performs user authentication, and a control section that outputs, when the authentication section authenticates that a user has valid authority, the content data recorded in the dedicated folder of the storage section.

With such a configuration, the recording section records the content data on which a parental level is set into the dedicated folder of the storage section, and records the content data on which a parental level is not set into the normal folder of the storage section. Therefore, when the authentication section authenticates that the user has a valid authority, the control section outputs the content data recorded in the dedicated folder so as to restrict viewing of the content data on which a parental level is set.

According to another embodiment of the present invention, there is provided a content receiving device connected to a content recording device that records content data, including a receiving section that receives the content data, a recording folder specifying section that specifies a dedicated folder as a recording destination of the content data when a parental level is set on the content data and an normal folder as the recording destination of the content data when no parental level is set on the content data, and a transmitting section that transmits the content data so that the content data is recorded in a folder specified by the recording folder specifying section of a storage medium contained in the content recording device.

With such a configuration, it causes the content recording device to record the content data on which a parental level is set in a folder specified by the recording folder specifying section, and to record the content data on which a parental level is not set in the normal folder.

As described above, a content recording system, a content recording method, a content recording device, and a content receiving device according to the present invention are capable of recording content data on which a parental level is set and content data on which a parental level is not set into a different folder respectively.

### Brief Description of Drawings

[Fig. 1] FIG. 1 is an explanatory diagram showing a configuration of a home network according to the present embodiment as an example of a content transmission system.
[Fig. 2] FIG. 2 is an explanatory diagram showing a concrete example of a layout of a house to which the home network is applied.
[Fig. 3] FIG. 3 is a function block diagram showing a configuration of a receiver according to the present embodiment.
[Fig. 4] FIG. 4 is an explanatory diagram showing a content reservation screen created by a display screen creating section of a receiver.
[Fig. 5] FIG. 5 is a function block diagram showing a configuration of a content recording device according to the present embodiment.
[Fig. 6] FIG. 6 is a function block diagram showing a configuration of a reproduction device according to the present embodiment.
[Fig. 7] FIG. 7 is an explanatory diagram showing a concrete example of a content list screen to be displayed on a display.
[Fig. 8] FIG. 8 is a sequence diagram showing a flow until content data is recorded in a specified folder.
[Fig. 9] FIG. 9 is a flow chart showing a flow of operations of the receiver.
[Fig. 10] FIG. 10 is a flow chart showing a flow until the content recording device records content data.
[Fig. 11] Fig. 11 is a flow chart showing a flow in which the content recording device controls the transmission of content data.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

The preferred embodiment of the present invention will be described in the order shown below.
(1) Overview of a home network according to the present embodiment
(2) Circumstance leading to the present embodiment
(3) Function of a receiver configuring a home network
(4) Function of a content recording device configuring a home network
(5) Function of a reproduction device configuring a home network
(6) Operation of the home network according to the present embodiment
(7) Conclusion

### (1) Overview of a home network according to the present embodiment

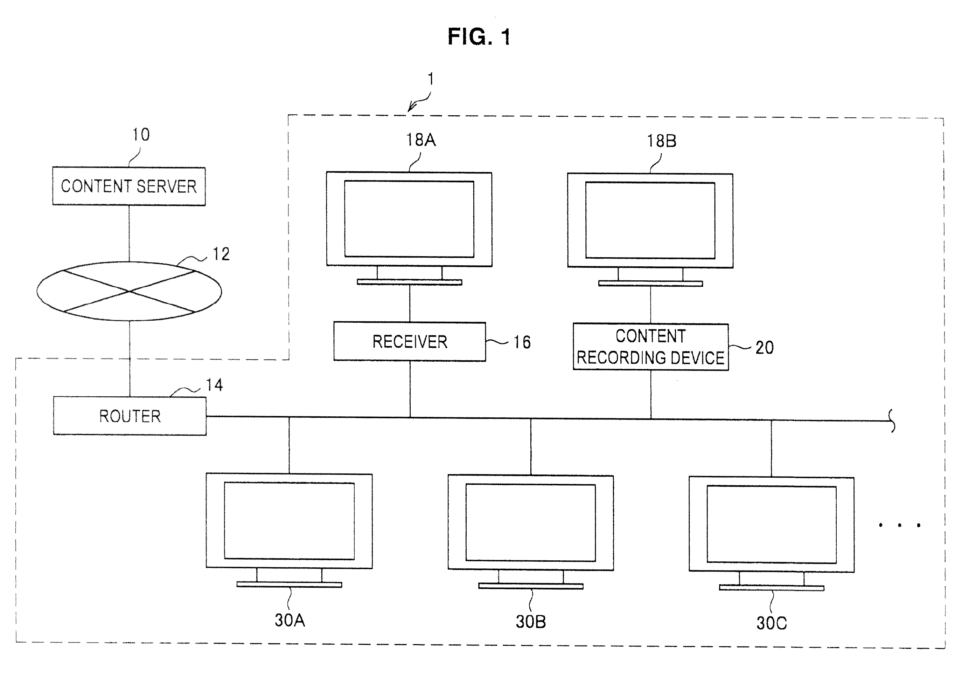

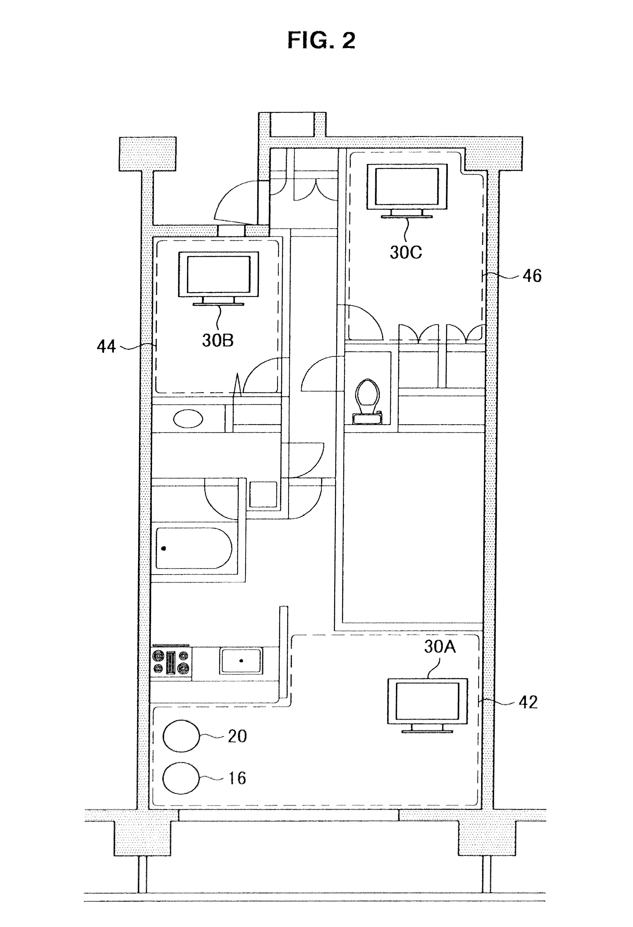

First, referring to FIGS. 1 and 2, a home network 1 according to the present embodiment will be schematically described.

FIG. 1 is an explanatory diagram showing a configuration of the home network 1 according to the present embodiment as an example of a content transmission system. As shown in FIG. 1, the home network 1 includes a router 14, a receiver 16, display devices 18A and 18B, a content recording device 20, and reproduction devices 30A to 30C. Note that, in FIG. 1, to distinguish each reproduction device, a capital letter is added to the reference numeral, such as reproduction devices 30A to 30C. However, when it is not necessary to particularly distinguish each reproduction device, they are simply collectively referred to as the reproduction device 30. Also for the display devices 18A and 18B, when it is not necessary to particularly distinguish between the display devices 18A and 18B, they are simply collectively referred to as the display device 18.

The router 14 is connected via a communication network 12 to a content server 10 which is storing content data and which is capable of delivering, transmitting or providing the content data. As the content data, there is audio data such as music, a lecture, a radio program, or the like, video image data such as a motion picture, a television program, a video program, a photograph, a document, a painting, a diagram, or the like, or any other data such as a game, software, or the like.

Further, the communication network 12 is a wired or a wireless communication path for information that is transmitted from a device connected to the communication network 12. For example, the communication network 12 may include a public network such as the Internet, telephone network, satellite network, or the like, and a leased line network such as various local area networks (LANs) including Ethernet (registered trademark), a wide area network (WAN), an Internet protocol-virtual private network (IP-VPN), or the like.

The receiver 16 is a content receiving device that receives content data by an arbitrary method. For example, the receiver 16 requests the content server 10 via the router 14 for the transmission of a content list, and receives the content list transmitted from the content server 10 in response to the request. And the receiver 16 displays the received content list on the display device 18A, and requests the content server 10 via the router 14 for transmission of content data selected by a user. Then, the content data transmitted from the content server 10 in response to the request is able to be received.

Further, the receiver 16 may receive content data by arbitrary broadcast such as a terrestrial wave digital broadcast, a cable TV broadcast, a broadcasting satellite (BS) digital broadcast, a communication satellite (CS) digital broadcast, or the like. The receiver 16 transmits the content data received in such manner to the content recording device 20. Note that each device configuring the home network may be connected in a wired manner or a wireless manner.

Further, in FIG. 1, although a case is shown where the receiver 16 and the content recording device 20 are configured separately, the receiver 16 and the content recording device 20 may be configured also as a single unit. Similarly, in FIG. 1, although a case is shown where the content recording device 20 and the reproduction device 30 are configured separately, the content recording device 20 and the reproduction device 30 may configured also as a single unit. Further, in FIG. 1, although a case is shown where the receiver 16 and the reproduction device 30 are configured separately, the receiver 16 and the reproduction device 30 may be configured also as a single unit.

The content recording device 20 has a function of a content transmission device storing in a storage section 250 embedded therein content data transmitted from the receiver 16. Further, the content recording device 20 can transmit to the reproduction device 30 the requested content data. However, with the content recording device 20 according to the present embodiment transmits content data recorded in a later-described dedicated folder only when the predetermined condition is fulfilled. The details of such content recording device 20 will be described later in "(4) Function of a content recording device configuring a home network."

The reproduction device 30 has a function of a content reproduction device obtaining content data from the content recording device 20 and reproducing the same. In FIG. 1, a monitor is shown as an example of the reproduction device 30. However, the reproduction device 30 may be an information processing device such as a personal computer (PC), a home video processing device (a DVD recorder, a video cassette recorder, or the like), a mobile telephone, a Personal Handyphone System (PHS), a portable audio playback device, a portable video processing device, a personal digital assistants (PDA), a home game machine, a portable game machine, a home appliance, or the like. The details of the function of the reproduction device 30 will be described later in "(5) Function of a reproduction device configuring a home network."

Next, a concrete example of a house to which the home network 1 described above is applied is described with reference to FIG. 2.

FIG. 2 is an explanatory diagram showing a layout of a house to which the home network 1 is applied. As shown in FIG. 2, the house has a living room 42, a children's room 44, and a parents' bedroom 46.

The receiver 16, the content recording device 20, and the reproduction device 30A are placed in the living room 42. Also, the reproduction device 30B is placed in the children's room 44, and the reproduction device 30C is placed in the bedroom 46.

As shown in FIG. 2, even if each reproduction device 30 exists in a different room, with the home network 1, content data stored in the content recording device 20 can be shared and reproduced by each reproduction device 30.

### (2) Circumstance leading to the present embodiment

Heretofore, with reference to FIGS. 1 and 2, the home network 1 according to the present embodiment has been schematically described. Next, the circumstance that has led to the present embodiment will be described.

When violence or sexual portrayal is included in content data, age restriction is set so that the content data is kept from being viewed by, for example, children under 18. As the age restriction, there is R (Restricted) 15 restricting viewing by children under 15, R18 restricting viewing by children under 18, and the like. R15 takes the age of 15 as the upper limit of the age restriction, and R18 takes the age of 18 as the upper limit of the age restriction. Accordingly, by setting age restriction for a content reproduction device used by children and keeping content data on which age restriction is set from being transmitted to the content reproduction device on which age restriction is set, children can be protected from inappropriate content data.

However, if no parental level is set on content data parents want to keep children from viewing, viewing of the content data by children is not restricted. While a method of automatically setting a parental level on content data can be considered, there has been a cause for concern that a parental level is not set to suit parents' intentions.

Further, if the user actually requests a content recording device in related art for transmission of a content list or content data, it is necessary for the content recording device in related art to determine whether or not any parental level is set for each piece of content data.

Thus, the above circumstance as a viewpoint led to the creation of the home network 1 according to the present embodiment. According to the home network 1 in the present embodiment, content data on which a parental level is set and content data on which no parental level is set can be recorded in different folders. Each configuration contained in the above-mentioned home network 1 will be described in detail below.

### (3) Function of a receiver configuring a home network

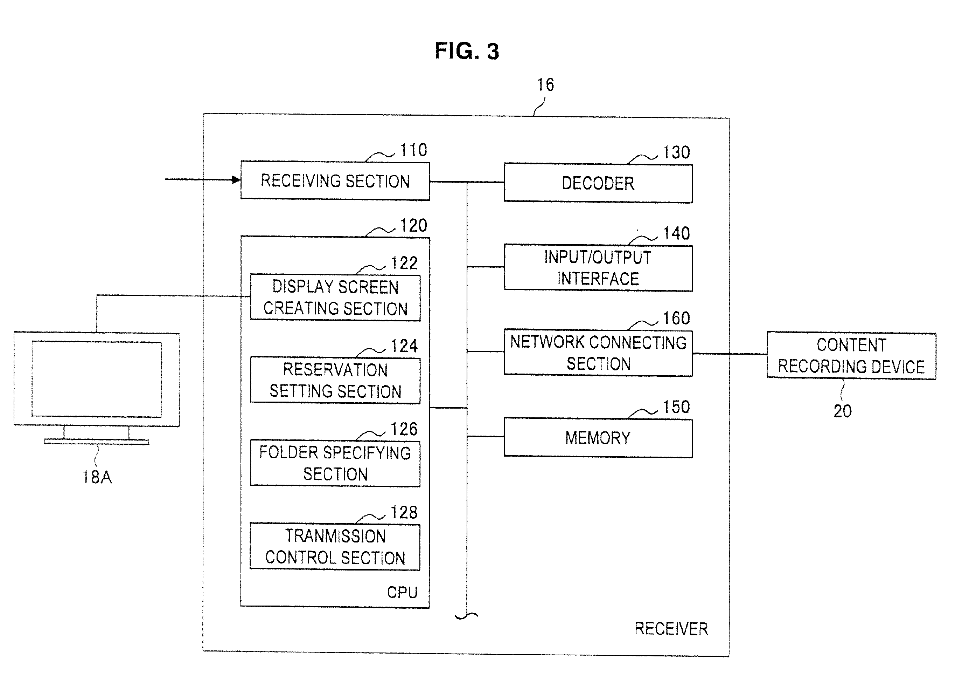

Fig. 3 is a function block diagram showing a configuration of the receiver 16 in the present embodiment. As shown in Fig. 3, the receiver 16 includes a receiving section 110, a CPU (Central Processing Unit) 120, a decoder 130, an input/output interface 140, a memory 150, and a network connecting section 160.

The receiving section 110 receives content data from outside by an arbitrary method. For example, the receiving section 110 may receive content data from arbitrary broadcasting such as terrestrial digital broadcasting, cable TV broadcasting, BS digital broadcasting, and CS digital broadcasting.

The CPU 120 is implemented with functions of, for example, a display screen creating section 122, a reservation setting section 124, a folder specifying section 126, a transmission control section 128, and the like, and controls the overall operation of the receiver 16. Although the drawing of such CPU 120 is omitted in FIG. 3, it may operate based on a program stored in a read only memory (ROM) with a random access memory (RAM) as the work area.

The decoder 130 decodes the content data received by the receiving section 110 or the network connecting section 160 so as to display them on the display device 18A connected to the receiver 16. As formats of content data to be decoded by the decoder 134, there are, for example, an image compression format such as Joint Photographic coding Experts Group (JPEG), Moving Picture Experts Group (MPEG) 1, MPEG 2, MPEG 4, or the like, an audio compression format such as MPEG1 Audio Layer-3 (MP3), Advanced Audio Coding (AAC), Linear PCM (LPCM), Windows (registered trademark) Media Audio 9 (WMA9), Adaptive Transform Acoustic Coding (ATRAC), ATRAC3, or the like.

The input/output interface 140 is an interface to the user of the receiver 16. The input/output interface 140 is configured by operation means including a touch panel, a button, a switch, a lever, a dial, and a light-receiving section for infrared signals or a receiving section for radio signals generated by a remote controller, an input control circuit creating an operation signal in response to the operation on the operation means by the user and outputting the same to the CPU 120, and the like. The user of the receiver 16 can, by operating the input/output interface 140, input various data to the receiver 16or issue instruction for various processes. As the various processes, there are, for example, reservation setting of content data, transfer instruction/reproduang/pausing/fast forwarding/rewinding/volume controlling of content data, and the like.

The memory 150 is a storage medium that stores various data such as reservation setting of content data. Such memory 150 may be a storage medium such as a non-volatile memory such as an electrically erasable programmable read-only memory (EEPROM), an erasable programmable read-only memory (EPROM) or the like, a magnetic disk such as a hard disk, a circular magnetic disk or the like, an optical disk such as a compact disc recordable (CD-R), a compact disc rewritable (CD-RW), a digital versatile disc recordable (DVD-R), a digital versatile disc rewritable (DVD-RW), a dual-layer digital versatile disc recordable (DVD+R), a dual-layer digital versatile disc rewritable (DVD+RW), a digital versatile disc random access memory (DVD-RAM), a Blu-ray (registered trademark) disc recordable (BD-R), a Blu-raya disc recordable (BD-RE) or the like, or a magneto-optical (MO) disk, or the like.

The network connecting section 160 is a wired or a wireless interface to other devices included in the home network 1, and functions as a receiving section receiving various data from the other devices and a transmitting section transmitting carious data to the other devices. For example, the network connecting section 160 may have the wireless communication function specified by IEEE (Institute of Electrical and Electronic Engineers) 802.11a, b, g and the like, or the MIMO (Multiple Input Multiple Output) communication function specified by IEEE 802.11n. Further, the network connecting section 160 may have a communication function compatible with the wired LAN specified by IEEE 802.3.

Next, the function implemented on the CPU 120 will be described in detail.

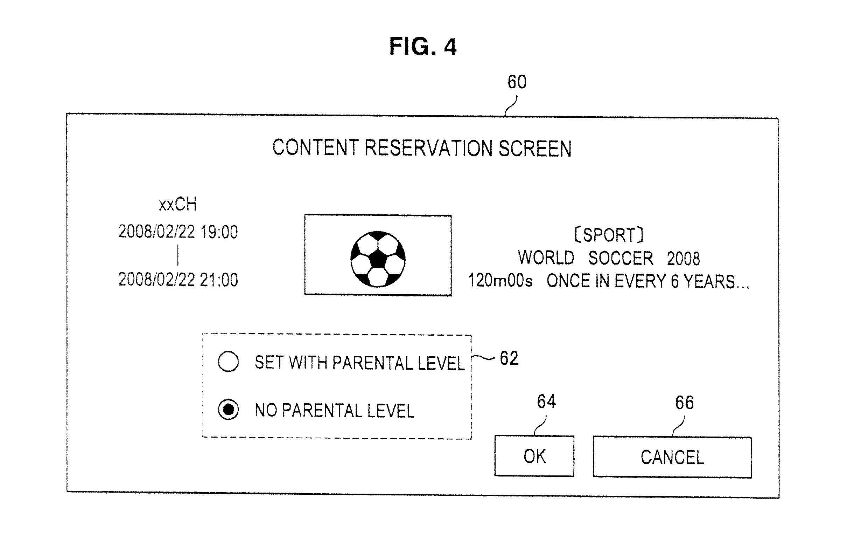

The display screen creating section 122 creates various display screens in response to input into the input/output interface 140 from the user and causes the display device 18A to display a created display screen. If, for example, a recording reservation of content data is requested from the user, the display screen creating section 122 creates a content reservation screen 60 shown in Fig. 4.

Fig. 4 is an explanatory diagram showing the content reservation screen 60 created by the display screen creating section 122 of the receiver 16. The content reservation screen 60 shown in Fig. 4 is a screen displayed after specific content data being selected by an arbitrary method as a reservation target. As an arbitrary method, there is EPG (Electronic Program Guide) or designation of the channel and the date/time on which the content data is broadcast.

As shown in Fig. 4, the content reservation screen 60 includes a parental level selection display 62, an OK button 64, and a cancel button 66. The user of the receiver 16 can select from the parental level selection display 62 whether to set a parental level on content data to be reserved.

If the user selects the OK button 64 on the content reservation screen 60, the reservation setting section 124 sets a reservation of content data to be reserved with content selected in the parental level selection display 62 and records the reservation in the memory 150. In the example shown in Fig. 4, the reservation setting section 124 makes a recording reservation of "World Soccer 2008" broadcast on xxCH between 19:00 and 21:00 on Feb. 22, 2008 without any parental level being set thereon.

The folder specifying section 126 has a function as a recording folder specifying section that specifies, when content data whose recording is reserved or the like is received by the receiving section 110, a recording destination of the content data in the content recording device 20. While the details thereof will be described later, the storage section 250 embedded in the content recording device 20 contains an normal folder and a dedicated folder that are logically separated. The folder specifying section 126 specifies the above normal folder or dedicated folder as the recording destination of the content data.

If, for example, "Set with view reservation" is selected by the user during recording reservation, the folder specifying section 126 specifies the dedicated folder as a recording destination of content data. If, on the other hand, "No parental level" is selected by the user during recording reservation, the folder specifying section 126 may specify the normal folder as a recording destination of content data. Alternatively, if "No parental level" is selected by the user during recording reservation and a parental level is set on content data, the folder specifying section 126 may specify the dedicated folder as a recording destination and if no parental level is set thereon, the folder specifying section 126 may specify the normal folder as a recording destination.

When no selection regarding the parental level is specifically made by the user during recording reservation, the folder specifying section 126 may specify the recording destination folder based on whether or not any parental level is set on content data. Moreover, when content data is actually transmitted to the content recording device 20, the display screen creating section 122 may create a selection screen of recording destination so that the folder specifying section 126 can specify the folder selected by the user in the selection screen as a recording destination.

The transmission control section 128 controls the transmission of content data from the network connecting section 160 so that the content data is recorded in the recording destination folder of the content recording device 20 specified by the folder specifying section 126. For example, before content data being transmitted from the network connecting section 160, the transmission control section 128 may transmit information indicating the recording destination folder from the network connecting section 160 to the content recording device 20. Alternatively, the transmission control section 128 may attach information indicating the recording destination folder to content data during transmission of the content data from the network connecting section 160.

The transmission control section 128 may also check whether the dedicated folder is provided in the content recording device 20 or not. Then, if no dedicated folder is provided in the content recording device 20, the transmission control section 128 may not transmit the content data for which the dedicated folder is specified by the folder specifying section 126. With such a configuration, viewing of content data for which the dedicated folder is specified by the folder specifying section 126 can be restricted with more reliability.

### (4) Function of a content recording device configuring a home network

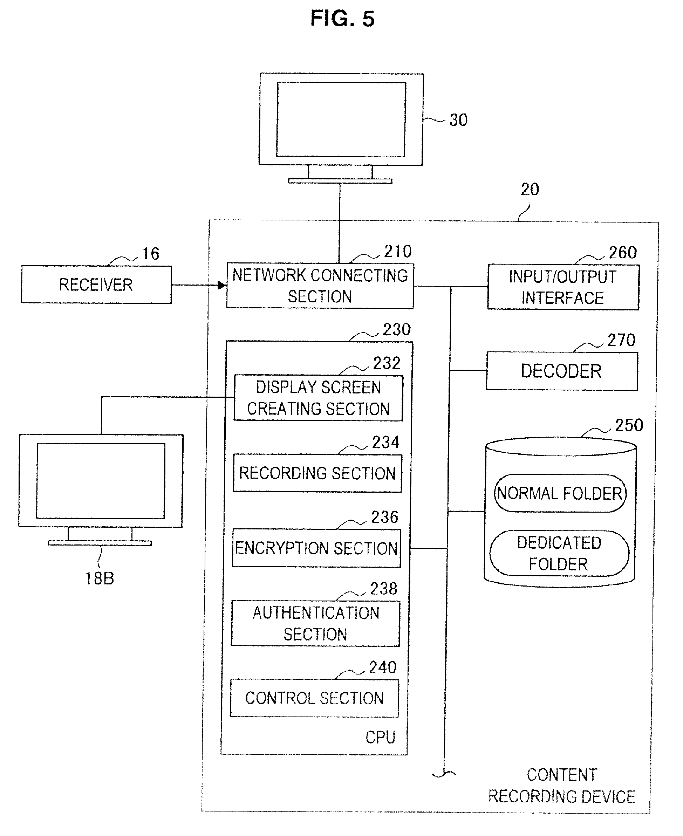

Heretofore, the function of the receiver 16 according to the present embodiment has been described with reference to FIGS. 3 and 4. Next, with reference to FIG. 5, a function of the content recording device 20 according to the present embodiment will be described.

FIG. 5 is a function block diagram showing a configuration of the content recording device 20 according to the present embodiment. As shown in FIG. 5, the content recording device 20 includes a network connecting section 210, a CPU 230, a storage section 250, and an input/output interface 260.

The network connecting section 210 is a wired or a wireless interface to other devices included in the home network 1, and functions as a receiving section receiving various data from the other devices and a transmitting section transmitting various data to the other devices. For example, the network connecting section 210 receives content data from the receiver 16 or transmits content data to the reproduction device 30. Further, as with the network connecting section 160 of the receiver 16, the network connecting section 210 may have the wireless communication function specified by IEEE 802.11a, b, g and the like, or the MIMO communication function specified by IEEE 802.11n. Further, the network connecting section 210 may have a communication function compatible with the wired LAN specified by IEEE 802.3.

The CPU 230 is implemented with functions of, for example, a display screen creating section 232, a recording section 234, a encryption section 236, an authentication section 238, and a control section 240, and controls the overall operation of the content recording device 20. Although its drawing is omitted in FIG. 5, the CPU 230 may operate based on a program stored in a ROM with a RAM as the work area.

The storage section 250 is a storage medium on which content data received from the receiver 16 by the network connecting section 210 is recorded. Such section, 250 includes a normal folder and a dedicated folder which are a recording area of the content data logically separated.

Such storage section 250 may be a storage medium, same as the memory 150 of the receiver 16, for example, such as a non-volatile memory such as an EEPROM, an EPROM or the like, a magnetic disk such as a hard disk, a circular magnetic disk or the like, an optical disk such as a CD-R/CD-RW, a DVD-R/RW/+R/RAM or a BD (Blu-ray Disc (registered trademark))-R/BD-RE or the like, or a MO disc or the like.

The input/output interface 260 is an interface to the user of the content recording device 20, and has a function of an input section. The input/output interface 260 is configured by operation means including a touch panel, a button, a switch, a lever, a dial, and a light-receiving section for infrared signals or a receiving section for radio signals generated by a remote controller, an input control circuit creating an operation signal in response to the operation on the operation means by the user and outputting the same to the CPU 230, and the like. The user of the content recording device 20 can, by operating the input/output interface 260, input various data to the content recording device 20 or issue instruction for various processes.

A decoder 270 decodes content data read from the storage section 250 and causes the display device 18B to display the content data. The decoder 270 may also decode content data when the content data is received from the receiver 16 to record the decoded content data in the storage section 250.

Next, the function implemented on the CPU 230 will be described in detail.

The display screen creating section 232 may create various display screens in response to a request from the user to cause the display device 18B to display the created display screen. For example, when a reproduction of the content data recorded in the dedicated folder by the content recording device 20 is requested, the display screen creating section 232 may create an input screen of password.

The recording section 234 records content data received by the network connecting section 210 from the receiver 16 in the storage section 250. The recording section 234 records the content data in the folder specified by the folder specifying section 126 of the receiver 16. For example, the recording section 234 records content data for which the dedicated folder is specified by the folder specifying section 126 of the receiver 16 in the dedicated folder and content data for which the normal folder is specified by the folder specifying section 126 of the receiver 16 in the normal folder.

The recording section 234 may record content data for which the dedicated folder is specified in the dedicated folder after the content data being encrypted by the encryption section 236. With such a configuration, even if content data is invalidly read from the storage section 250, an outflow and invalid viewing of the content data can be prevented because the content data is encrypted.

When a reproduction of the content data recorded in the dedicated folder, the authentication section 238 authenticates whether the user has the valid authority or not. The authentication process by the authentication section 238 may be a password method requiring the user to input a password, and performing authentication based on whether or not the input password matches to the password stored in the storage section 250, for example. Further, the authentication process may be a medium authentication method requiring the user to move an IC card closer, and performing authentication based on whether or not the IC card that is brought closer matches the IC card information stored in the storage section 250. In addition, the authentication process may be a voice authentication method using the voice of the user, a retina authentication method based on the pattern of the retina of the user, a face authentication method based on the shape of the face of the user, or the like.

Content data recorded in the dedicated folder or normal folder may be requested for reproduction by the content recording device 20 or for reproduction by the reproduction devices 30.

When a reproduction of the content data is requested, the control section 240 controls whether to cause the storage section 250 to output the requested content data. More specifically, if the requested content data is recorded in the normal folder, the control section 240 allows the content data to be output to the decoder 270 or the reproduction device 30 because no parental level is set on the content data.

If, on the other hand, the requested content data is recorded in the dedicated folder, the control section 240 controls output from the storage section 250 depending on whether or not the authentication section 238 authenticates that the user has valid authority because a parental level is set on the content data. The control section 240 can determine whether or not any parental level is set on each piece of content data based on whether or not the content data is recorded in the dedicated folder without checking each piece of content data. Thus, internal processing of the content recording device 20 and operations by the user can be simplifies. Further, the receiver 16 determines whether any parental level is set and specifies the folder and thus, an occurrence of misjudgment due to differences of receiving systems or content data formats can be prevented.

### (5) Function of a reproduction device configuring a home network

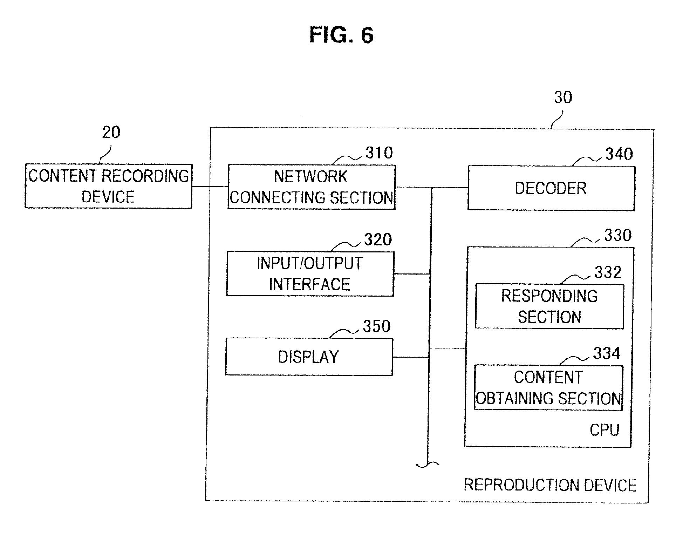

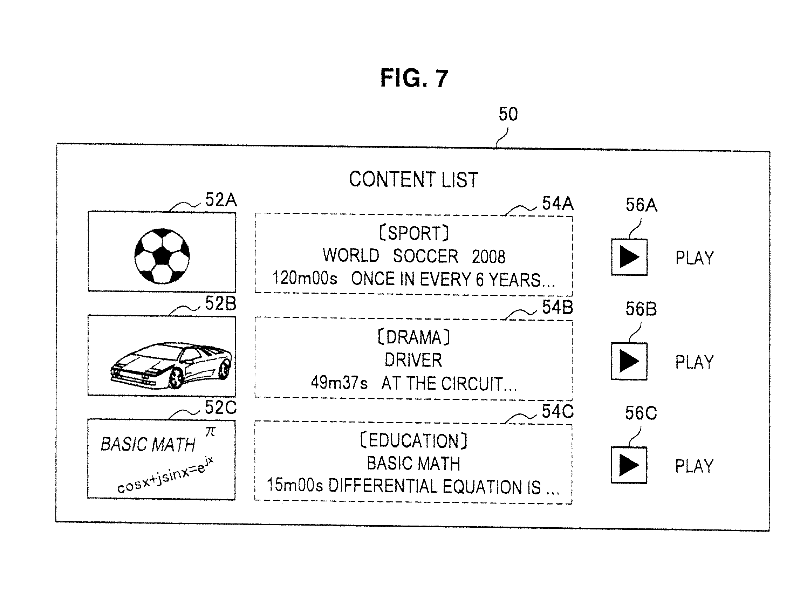

Heretofore, the function of the content recording device 20 according to the present embodiment has been described with reference to FIGS. 5. Next, with reference to FIGS. 6 and 7, a function of the reproduction device 30 according to the present embodiment will be described.

FIG. 6 is a function block diagram showing a configuration of the reproduction device 30 according to the present embodiment. As shown in FIG. 6, the reproduction device 30 includes a network connecting section 310, an input/output interface 320, a CPU 330, a decoder 340, and a display 350.

The network connecting section 310 is a wired or a wireless interface to other devices included in the home network 1, and functions as a receiving section receiving various data from the devices and a transmitting section transmitting various data to the other devices. For example, as with the network connecting section 160 of the reproduction device 16, the network connecting section 310 may have the wireless communication function specified by IEEE 802.11a, b, g and the like, or the MIMO communication function specified by IEEE 802.11n. Further, the network connecting section 310 may have a communication function compatible with the wired LAN specified by IEEE 802.3.

The input/output interface 320 is an interface to the user of the reproduction device 30. The input/output interface 320 is configured by operation means including a touch panel, a button, a switch, a lever, a dial, and a light-receiving section for infrared signals or a receiving section for radio signals generated by a remote controller, an input control circuit creating an operation signal in response to the operation on the operation means by the user and outputting the same to the CPU 330, and the like. The user of the reproduction device 30 can, by operating the input/output interface 320, input various data to the reproduction device 30 or issue instruction for various processes. As the various processes, there are, for example, selection of content data from a content list, reproducing/pausing/fast forwarding/rewinding/volume controlling of content data, and the like.

The CPU 330 is implemented with functions of, for example, a responding section 332, a content obtaining section 334, and the like, and controls the overall operation of the reproduction device 30. Although the drawing of such CPU 330 is omitted in FIG. 3, it may operate based on a program stored in a read only memory (ROM) with a random access memory (RAM) as the work area.

The responding section 332 responds to various requests from the devices in the home network 1. For example, when the content recording device 20 transmits a response request to grasp the reproduction device 30 existing in the home network 1, the responding section 332 responds via the network connecting section 310 to show that the device to which it belongs exists in the home network 1.

The content obtaining section 334 performs a series of processes for obtaining content data from the content recording device 20. For example, the content obtaining section 334 requests the content recording device 20 for transmission of a content list showing a list of content data that can be obtained at the time. At this time, the content recording device 20 transmits a content list indicating the content data recorded in the normal folder in response to the request. Further, the content recording device 20 transmits the content list indicating the content data recorded in the dedicated folder when the authentication section 238 authenticates that the user has the valid authority.

And when the content list transmitted from the content recording device 20 is received, the content obtaining section 334 requests the content recording device 20 for transmission of content data selected from the content list by the user via the input/output interface 320. Then, the reproduction device 30 can obtain the content data transmitted from the content recording device 20 in response to the request from the content obtaining section 334. Therefore, the reproduction device 30 according to the present embodiment can obtain and reproduce the content data recorded in the dedicated folder, only when the user has the valid authority.

The decoder 340 decodes the content data transmitted from the content recording device 20. And the display 350 displays the content data decoded by the decoder 340. As format data of content data to be decoded by the decoder 340, there are, for example, an image compression format such as Joint Photographic coding Experts Group (JPEG), Moving Picture Experts Group (MPEG) 1, MPEG 2, MPEG 4, or the like, an audio compression format such as MPEG1 Audio Layer-3 (MP3), Advanced Audio Coding (AAC), Linear PCM (LPCM), Windows (registered trademark) Media Audio 9 (WMA9), Adaptive Transform Acoustic Coding (ATRAC), ATRAC3, or the like. Further, as shown in FIG. 7, the display 350 also displays a content list screen 50 showing the above-described content list.

FIG. 7 is an explanatory diagram showing a concrete example of the content list screen 50 to be displayed on the display 350. As shown in FIG. 4, the content list screen 50 includes thumbnails 52A to 52C corresponding to each content data, brief information 54A to 54C, and Play buttons 56A to 56C.

The user of the reproduction device 30 can select, for example, the Play button 56A for content data whose title is "World Soccer 2008" via the input/output interface 320 on the content list screen 50 shown in FIG. 7. When the Play button 56A is selected by the user of the reproduction device 30, the content obtaining section 334 requests the content recording device 20 for transmission of the content data whose title is "world Soccer 2008." Then, the decoder 340 decodes the content data whose title is "World Soccer 2008" transmitted from the content recording device 20, and the display 350 displays the content data decoded by the decoder 340. Note that the display 350 may include the function of an audio output section such as a speaker, earphones or the like outputting audio.

### (6) Operation of the home network according to the present embodiment

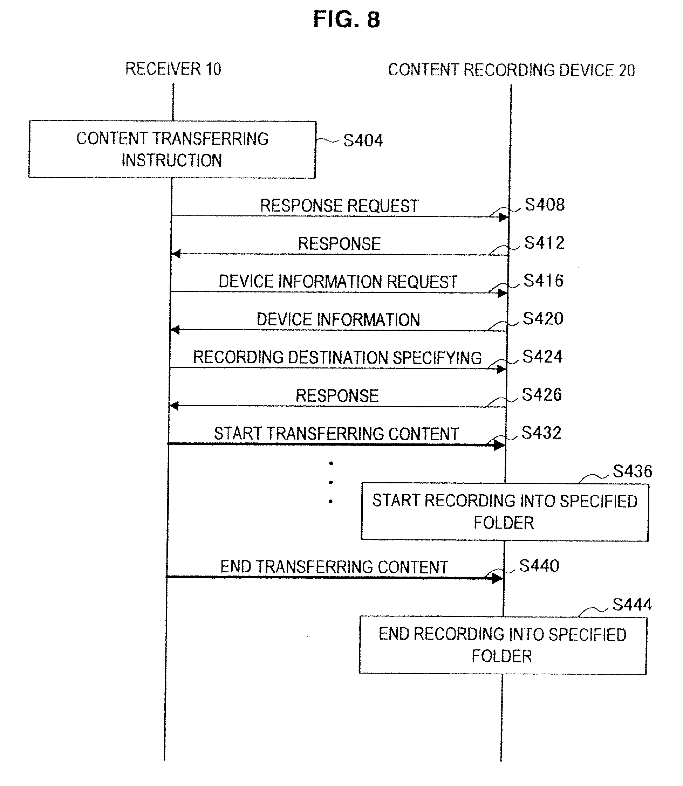

Next, an operation of the home network 1 according to the present embodiment will be described with reference to FIGS. 8 to 11.

Fig. 8 is a sequence diagram showing a flow until content data is recorded in a specified folder. As shown in Fig. 8, first when instruction for transferring content data or recording reservation is issued from the user to the receiver 16 (S404), the receiver 16 transmits a response request to the content recording device 20 contained in the home network 1 (S408). When the content recording device 20 present in the home network 1 receives the response request from the receiver 16, the content recording device 20 transmits a response containing an IP address of the content recording device 20 to the receiver 16 (S412).

Next, the receiver 16 requests the content recording device 20 for transmission of device information of the content recording device 20 based on the IP address contained in the response (S416). When the transmission of device information is requested, the content recording device 20 transmits device information including the function and device name of the content recording device 20 to the receiver 16 (S420).

Then, when the content data, the content recording device 20, and a recording destination folder are specified by the user via the input/output interface 140, the receiver 16 notifies the content recording device 20 of the recording destination folder (S424). If the content recording device 20 has the notified folder, the content recording device 20 responds accordingly (S428).

Then, the transmission control section 128 of the receiver 16 starts the transmission of the content data from the network connecting section 160 (S432). Further, the content recording device 20 starts recording of the content data received from the receiver 16 in the specified folder (S436). Next, when the transmission of content data from the receiver 16 is completed (S440), the content recording device 20 terminates the recording of the content data (S444).

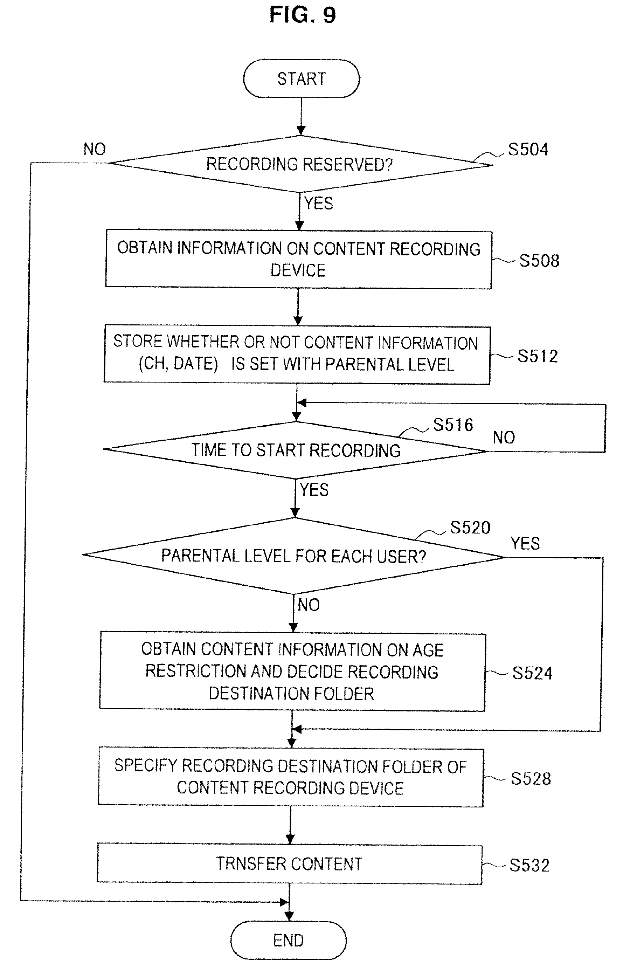

Fig. 9 is a flow chart showing a flow of operations of the receiver 16. As shown in Fig. 9, when a recording reservation is set by the user (S504), the receiver 16 obtains device information of the content recording device 20 (S508) and saves content (the channel, time, presence/absence of a parental level and the like) of the recording reservation in the memory 150 (S512).

Then, when the recording start time comes (S516), if no parental level is set by the user (S520), the folder specifying section 126 decides the recording destination folder based on an age restriction set on the content data (S524). If the parental level is set by the user, the folder specifying section 126 decides the dedicated folder as the recording destination folder.

Thereafter, the folder specifying section 126 specifies the recording destination folder decided for the content recording device 20 (S528), and the transmission control section 128 starts the transfer of content data from the network connecting section 160 (S532).

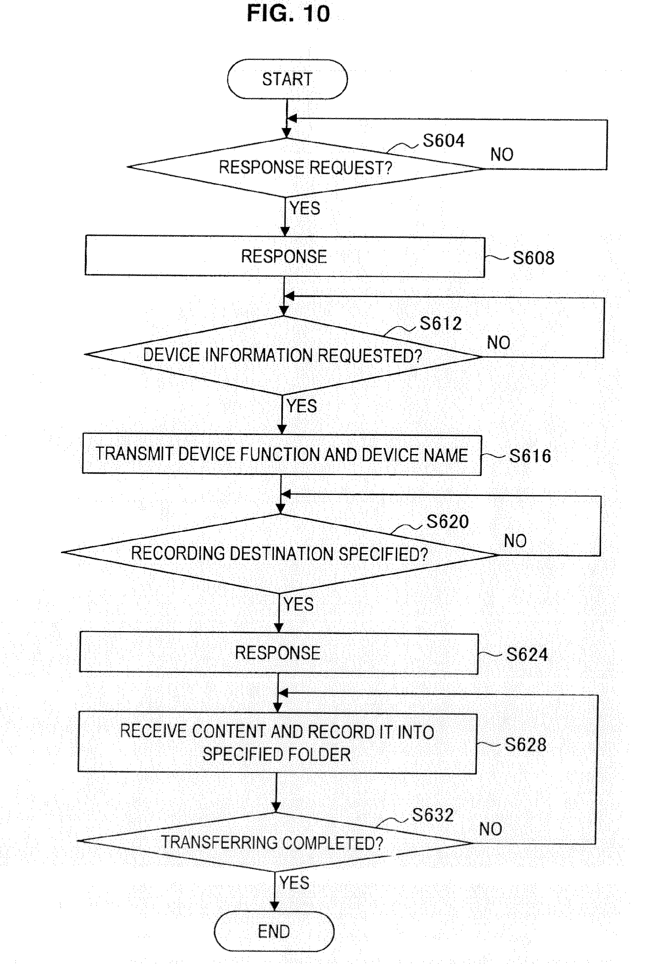

Fig. 10 is a flow chart showing a flow until the content recording device 20 records content data. As shown in Fig. 10, if there is a response request from the receiver 16 (S604), the content recording device 20 returns a response indicating that the local device is present in the home network 1 to the receiver 16 (S608).

Next, if the transmission of device information is requested by the receiver 16 (S612), the content recording device 20 transmits the device function, device name, and the like to the receiver 16 (S616). Further, if the recording destination folder of content data is specified by the receiver 16 (S620), the content recording device 20 returns a response to the specification to the receiver 16 (S624).

Then, the content recording device 20 receives content data from the receiver 16 and records the content data in the specified folder (S628). Such recording of content data continues until the transfer of content data from the receiver 16 is completed (S632).

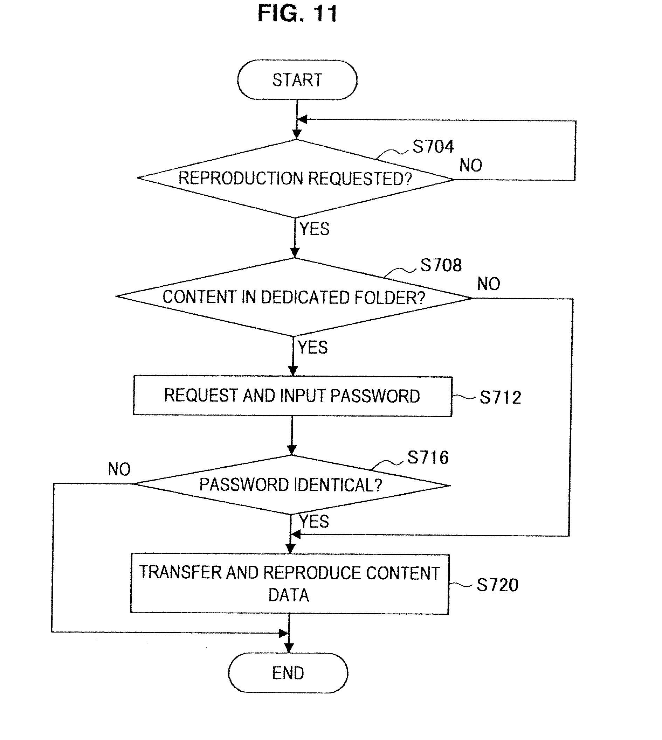

Fig. 11 is a flow chart showing a flow in which the content recording device 20 controls the transmission of content data. As shown in Fig. 11, when a reproduction of content data is requested from the reproduction device 30 (S704), if the content data is content data recorded in the dedicated folder (S708), the content recording device 20 requests the user for a password (S712).

If the password input by the user matches a specified password (S716), the content recording device 20 transfers the content data to the reproduction device 30 so that the content data is reproduced by the reproduction device 30 (S720).

### (7) Conclusion

According to the present embodiment, as described above, content data on which a parental level is set is recorded in the dedicated folder and content data on which no parental level is set in the normal folder. Therefore, if the authentication section 238 authenticates that the user has the valid authority, the control section 240 can restrict viewing of content data on which a parental level is set by outputting content data recorded in the dedicated folder.

The receiver 16 exercises control so that content data on which any parental level is set is not transmitted to the content recording device 20 having no dedicated folder. Therefore, viewing of content data on which any parental level is set can be restricted with more reliability.

Further, the content recording device 20 includes the encryption section 236 that encrypts content data transmitted by specifying the dedicated folder from the receiver 16. Therefore, even if content data is invalidly read from the dedicated folder of the storage section 250, an outflow and invalid viewing of the content data can be prevented because the content data is encrypted.

It should be understood by those skilled in the art that various modifications, combinations, sub-combinations and alterations may occur depending on design requirements and other factors insofar as they are within the scope of the appended claims or the equivalents thereof. In such configuration, the reproduction of content data can be restricted more flexibly. In such configuration, the viewing of content data can be restricted more flexibly.

In the above embodiment, for example, an example in which the storage section 250 of the content recording device 20 contains the normal folder and the dedicated folder has been described, but the present invention is not limited to such an example. For example, the storage section 250 may have a plurality of folders in accordance with an age restriction of content data. Further, a different password may be requested for each folder.

Further, the respective steps of the processing of the home network 1 according to this specification do not necessarily have to be performed in a temporal sequence in the order shown in the flow charts or the sequence diagrams. For example, the respective steps of the processing of the home network 1 may also be performed in parallel or individually (for example, in parallel processing or processing according to an object).

It is also possible to create a computer program that will cause the CPU 230 of the content recording device 20 to function, in cooperation with the hardware, such as the ROM, the RAM, and the like, as the display screen creating section, the recording section 234, the encryption section 236, the authentication section 238, and the control section 240. A storage medium storing the computer program may also be provided. Further, a series of processes by the content recording device 20 can be implemented in hardware by configuring as hardware the display screen creating section 232, the recording section 234, the encryption section 236, the authentication section 238, and the control section 240.

It is also possible to create a computer program that will cause the CPU 120 of the receiver 16 to function, in cooperation with the hardware, such as the ROM, the RAM and the like, as the display screen creating section 122, the reservation setting section 124, the folder specifying section 126 and the transmission control section 128. A storage medium storing the computer program may also be provided. Further, a series of processes by the receiver 16 can be implemented in hardware by configuring as hardware the display screen creating section 122, the reservation setting section 124, the folder specifying section 126 and the transmission control section 128.

## Claims

1. A content recording system comprising a content receiving device that receives content data and a content recording device that records the content data received by the content receiving device, wherein
the content receiving device includes:
a transmitting section that transmits the content data; and
a recording folder specifying section that specifies a dedicated folder as a recording destination of the content data when a parental level is set on the content data and an normal folder as the recording destination of the content data when no parental level is set on the content data, and
the content recording device includes:
a storage section containing the dedicated folder and the normal folder;
a recording section that records the content data transmitted from the transmitting section in a folder of the storage section specified by the recording folder specifying section;
an authentication section that performs user authentication; and
a control section that outputs, when the authentication section authenticates that a user has valid authority, the content data recorded in the dedicated folder of the storage section.

2. The content recording system according to claim 1, wherein the content receiving device further comprises an input section where a setting operation of a parental level on the content data is performed by the user.

3. The content recording system according to claim 1, wherein the content receiving device further comprises a transmission control section that exercises control so that the content data on which the parental level is set is not transmitted to the content recording device having no dedicated folder.

4. The content recording system according to claim 1, wherein the content recording device further an encryption section that encrypts the content data transmitted from the content receiving device and on which the parental level it set and
the recording section records the content data encrypted by the encryption section in the dedicated folder of the storage section.

5. The content recording system according to claim 1, wherein the storage section includes a plurality of the dedicated folders for each level of the parental level and
the recording folder specifying section specifies the dedicated folder in accordance with the level of the parental level of the content data as a recording destination of the content data on which the parental level is set.

6. A content recording method, comprising the steps of:
receiving content data;
specifying a dedicated folder as a recording destination of the content data when a parental level is set on the content data and an normal folder as the recording destination of the content data when no parental level is set on the content data;
recording the content data in a specified folder of a storage medium containing the dedicated folder and the normal folder;
performing user authentication; and
outputting the content data recorded in the dedicated folder when authenticated that a user has valid authority.

7. A content recording device connected to a content receiving device that receives content data, comprising:
a receiving section that receives the content data whose recording destination folder is specified from the content receiving section;
a storage section containing a dedicated folder and an normal folder;
a recording section that records the content data received by the receiving section in a specified recording destination folder of the storage section;
an authentication section that performs user authentication; and
a control section that outputs, when the authentication section authenticates that a user has valid authority, the content data recorded in the dedicated folder of the storage section.

8. A content receiving device connected to a content recording device that records content data, comprising:
a receiving section that receives the content data;
a recording folder specifying section that specifies a dedicated folder as a recording destination of the content data when a parental level is set on the content data and an normal folder as the recording destination of the content data when no parental level is set on the content data; and
a transmitting section that transmits the content data so that the content data is recorded in a folder specified by the recording folder specifying section of a storage medium contained in the content recording device.
